# EUROPÄISCHE PATENTSCHRIFT

(11) **EP 2 411 236 B1**
(45) Veröffentlichungstag und Bekanntmachung des Hinweises auf die Patenterteilung: **06.05.2015**
(21) Anmeldenummer: 09795399.6
(22) Anmeldetag: 15.12.2009
(51) Int. Cl.: B60G 17/04, B60G 17/052

(54) **KRAFTFAHRZEUG MIT EINER NIVEAUREGELANLAGE**
VEHICLE WITH A LEVEL CONTROL SYSTEM
VÉHICULE AVEC UN DISPOSITIF DE RÉGLAGE DU NIVEAU

(30) Priorität: 27.03.2009 DE 102009003686
(43) Veröffentlichungstag der Anmeldung: 01.02.2012
(73) Patentinhaber: Continental Teves AG & Co. oHG, 60488 Frankfurt (DE)
(72) Erfinder: ENGELHARDT, Marek, 36289 Friedewald (DE); HEIN, Dierk, 30900 Wedemark (DE)
(86) Internationale Anmeldenummer: PCT/EP2009/067164
(87) Internationale Veröffentlichungsnummer: WO 2010/108557

(56) Entgegenhaltungen:
- EP-A2- 1 243 447
- DE-A1- 10 120 206
- DE-A1- 10 331 600
- DE-A1- 10 354 491
- DE-A1- 19 810 764
- DE-A1-102005 018 434
- DE-A1-102006 039 538
- DE-C1- 19 621 946

## Beschreibung

Die Erfindung betrifft ein Kraftfahrzeug mit einer Niveauregelanlage, die folgende Bestandteile enthält:
- Luftfedern,
- mindestens einen Druckluftspeicher,
- Druckluftleitungen mit schaltbaren Wegeventilen, mit denen die Druckluftleitungen gesperrt oder durchgeschaltet werden können,
- einen Kompressor, mit dem über Druckluftleitungen für einen Aufregelvorgang Druckluft aus dem Druckluftspeicher in die Luftfedern überführbar ist, und mit dem über Druckluftleitungen für einen Abregelvorgang Druckluft aus den Luftfedern in den Druckluftspeicher überführbar ist,
- eine Steuereinheit, in der ein Abschaltgrenzwert für mindestens einen Betriebsparameter mindestens eines Bestandteils der Niveauregelanlage überwacht wird, wobei die Betätigung des Bestandteils bei Erreichen des Abschaltgrenzwertes unterbunden bzw. abgebrochen wird.

Eine Niveauregelanlage für ein Kraftfahrzeug, in der zur Niveauregelung des Fahrzeugaufbaus Druckluft mit Hilfe eines Kompressors zwischen einem Speicher und den Luftfedern hin- und hergepumpt wird, ist seit langem aus dem Stand der Technik, z. B. der EP 1 243 447 A2 bekannt und wird als geschlossene Niveauregelanlage bezeichnet. Bei einer geschlossenen Niveauregelanlage werden die Luftfedern zur Absenkung des Fahrzeugaufbaus in den Speicher entleert, wohingegen bei einer offenen Niveauregelanlage die Luftfedern zur Absenkung des Fahrzeugaufbaus in die Atmosphäre entleert werden. Eine geschlossene Niveauregelanlage weist gegenüber einer offenen Niveauregelanlage den Vorteil auf, dass ein schnelles Anheben und Absenken des Fahrzeugaufbaus mit geringem Energieaufwand möglich ist.

Eine Niveauregelanlage weist unterschiedliche Bestandteile auf, für die bestimmte Betriebsparameter eingehalten werden müssen, damit diese Bestandteile nicht beschädigt werden. So können insbesondere der Kompressor und die schaltbaren Wegeventile einer Niveauregelanlage durch zu hohe Temperaturen beschädigt werden. Es ist deshalb aus dem Stand der Technik bereits bekannt, den Betriebsparameter "Kompressortemperatur" zu überwachen und einen Abschaltgrenzwert für diesen Betriebsparameter einzuführen. Der Kompressor der Niveauregelanlage wird abgeschaltet, wenn die Kompressortemperatur den Abschaltgrenzwert erreicht, so dass einer Beschädigung des Kompressors sicher vorgebeugt ist. Es ist jedoch festzustellen, dass ein Abschalten der empfindlichen Bestandteile der Niveauregelanlage bei Erreichen des jeweiligen Abschaltgrenzwertes entweder zu einem Abbruch eines aktuellen Regelvorganges oder zu einer Unterbindung eines folgenden Regelvorganges in der Niveauregelanlage führen. Es gibt jedoch Regelvorgänge, die aus Sicherheitsgründen unbedingt durchgeführt werden müssen. Insbesondere muss es in einem Kraftfahrzeug mit einer Niveauregelanlage immer möglich sein, den Fahrzeugaufbau abzusenken. So kann z.B. die Absenkung des Fahrzeugaufbaus aus einem Hochniveau notwendig sein, um den Fahrzeugaufbau in ein fahrdynamisch sicheres Niveau abzusenken oder um einen guten Fußgängerschutz im Falle einer Kollision zwischen Kraftfahrzeug und Fußgänger zu gewährleisten. Dies ist z.B. nicht gewährleistet, wenn der Fahrzeugaufbau kurz vor der Absenkung mit Hilfe der Niveauregelanlage in das Hochniveau angehoben wurde und dabei der Betriebsparameter eines Bestandteiles der Niveauregelanlage die Abschaltgrenze erreicht hat. In diesem Fall würde die nachfolgende Absenkung des Fahrzeugaufbaus unterbunden. Ein ausreichendes Absenken des Fahrzeugaufbaus ist auch dann nicht gewährleistet, wenn der Abregelvorgang vorzeitig unterbrochen wird, weil während des Abregelvorganges der Betriebsparameter eines Bestandteiles der Niveauregelanlage die Abschaltgrenze erreicht.

In der DE 19810764 A1 wird in diesem Zusammenhang vorgeschlagen, den Kompressor ab Erreichen des Abschaltgrenzwertes für die Kompressortemperatur getaktet zu betreiben, so dass sich der Kompressor während des Taktbetriebes nicht weiter erwärmt und nicht beschädigt wird. Es ist jedoch festzustellen, dass mit Hilfe eines getakteten Betriebes des Kompressors das gewünschte schnelle Absenken des Fahrzeugaufbaus durch Entleeren der Luftfedern in den Druckluftspeicher der Niveauregelanlage nicht möglich ist.

Aus der DE 103 54 491 A1 ist ferner bekannt, die Betätigung des Kompressors bei Erreichen einer Grenztemperatur als Abschaltgrenzwert abzubrechen.

Der Erfindung liegt die Aufgabe zugrunde, ein Kraftfahrzeug mit einer geschlossenen Niveauregelanlage zu schaffen, mit der ein Absenken des Fahrzeugaufbaus durch Entleeren der Luftfedern immer möglich ist.

Die Aufgabe wird gemäß den kennzeichnenden Merkmalen des Anspruchs 1 dadurch gelöst, dass bei Aufregelvorgängen die Betätigung des Bestandteils bei Erreichen des Abschaltgrenzwertes unterbunden bzw. abgebrochen wird und dass bei Abregelvorgängen eine Überschreitung des Abschaltgrenzwertes des Betriebsparameters zugelassen wird.

Der Vorteil der Erfindung ist darin zu sehen, dass ein schneller Abregelvorgang in der Niveauregelanlage und damit ein schnelles Absenken des Fahrzeugaufbaus des Kraftfahrzeuges immer möglich ist. Ein weiterer Vorteil der Erfindung ist darin zu sehen, dass die Druckluft in der geschlossenen Niveauregelanlage erhalten bleibt, da auch bei Abregelvorgängen, bei denen es zu einer Überschreitung der Abschaltgrenze mindestens eines Betriebsparameter kommt, die Druckluft mit Hilfe des Kompressors aus den Luftfedern in den Druckluftspeicher der Niveauregelanlage überführt wird. Ein späteres Wiederauffüllen der Niveauregelanlage aus der Atmosphäre, so wie es notwendig wäre, wenn man die Luftfedern für ein schnelles Absenken des Fahrzeugaufbaus in die Atmosphäre entleeren würde, entfällt somit. Ein weiterer Vorteil der Erfindung ist darin zu sehen, dass die Bestandteile der Niveauregelanlage gut vor einer Beschädigung gut geschützt sind, da die Abschaltgrenzwerte bei Aufregelvorgängen immer eingehalten und nur bei Abregelvorgängen überschritten werden.

Gemäß einer Weiterbildung der Erfindung nach Anspruch 2 ist den schaltbaren Wegeventilen und dem Kompressor jeweils mindestens ein Betriebsparameter zugeordnet, wobei bei Abregelvorgängen eine Überschreitung des jeweiligen Abschaltgrenzwertes sämtlicher Betriebsparameter zugelassen wird. Der Vorteil dieser Weiterbildung ist darin zu sehen, dass die besonders empfindlichen Bestandteile der Niveauregelanlage, nämlich die schaltbaren Wegeventile und der Kompressor, wirksam vor einer Beschädigung geschützt sind und dennoch schnelle Abregelvorgänge mit Hilfe der Niveauregelanlage möglich sind.

Gemäß einer Weiterbildung der Erfindung nach Anspruch 3 ist jedem schaltbaren Wegeventil dessen Einschaltdauer als Betriebsparameter zugeordnet. Die Einschaltdauer eines Wegeventils steht im direkten Zusammenhang mit der Temperatur innerhalb des Wegeventils, die überwacht werden muss, um einer Beschädigung des Wegeventils vorzubeugen. Der Vorteil der Weiterbildung ist also darin zu sehen, dass mit der Überwachung der Einschaltdauer des Wegeventils eine indirekte Überwachung der Temperatur in dem Wegeventil möglich ist. Ein weiterer Vorteil der Weiterbildung ist darin zu sehen, dass die Einschaltdauer eines schaltbaren Wegeventils auf einfache Art und Weise überwacht werden kann.

Eine Weiterbildung gemäß Anspruch 4 der Erfindung ist dadurch gekennzeichnet, dass die Einschaltdauer eines schaltbaren Wegeventils wie folgt in der Steuereinheit überwacht wird:
- es ist ein Zeitintervall einer bestimmten Länge festgelegt,
- es wird die Einschaltdauer überwacht, während der das schaltbare Wegeventil in dem zurückliegenden Zeitintervall eingeschaltet ist,
- das schaltbare Wegeventil wird grundsätzlich ausgeschaltet, wenn die Einschaltdauer innerhalb des letzten zurückliegenden Zeitintervalls einen festgelegten Abschaltgrenzwert erreicht,
- ein erneutes Einschalten des Wegeventils wird erst dann wieder zugelassen, wenn die Einschaltdauer in dem letzten zurückliegenden Zeitintervall einen Einschaltgrenzwert erreicht, der kleiner ist als der Abschaltgrenzwert,
- wobei die Steuereinheit während eines Abregelvorganges eine Überschreitung der Zeitspanne in dem letzten zurückliegenden Zeitintervall zulässt bzw. die Steuereinheit nach einem Ausschalten des Wegeventils ein erneutes Einschalten des Wegeventils zur Einleitung eines Abregelvorganges auch dann gestattet, wenn der Einschaltgrenzwert noch nicht erreicht ist.

Ein Vorteil dieser Weiterbildung ist darin zu sehen, dass ein ständiges Ein- und Ausschalten des schaltbaren Wegeventils vermieden wird, da bei Aufregelvorgängen ein erneutes Einschalten des Wegeventils nach Erreichen des Abschaltgrenzwertes erst dann wieder gestattet wird, wenn der Einschaltgrenzwert erreicht ist. Somit steht als neue Einschaltdauer die Differenz zwischen den beiden Grenzwerten zur Verfügung. Ein weiterer Vorteil der Weiterbildung ist darin zu sehen, dass schnelle Abregelvorgänge in der Niveauregelanlage immer möglich sind.

Gemäß einer Weiterbildung der Erfindung nach Anspruch 5 ist dem Kompressor die Kompressortemperatur als Betriebsparameter zugeordnet. Die Kompressortemperatur kann mit Hilfe eines Temperatursensors oder mit Hilfe eines geeigneten Kompressortemperaturmodells, wie sie aus dem Stand der Technik bekannt sind, überwacht werden. Der Vorteil der Weiterbildung ist darin zu sehen, dass der Kompressor durch eine Überwachung der Kompressortemperatur besonders gut vor einer Beschädigung geschützt werden kann.

Gemäß einer Weiterbildung der Erfindung nach Anspruch 6 ist dem Kompressor die Umgebungstemperatur des Kompressors als Betriebsparameter zugeordnet. In modernen Kraftfahrzeugen kann der Fall auftreten, dass der Kompressor an einer Stelle eingebaut wird, in der besondere hohe Umgebungstemperaturen herrschen, z. B. in Nähe des Motorblocks. Der Vorteil der Weiterbildung ist darin zu sehen, dass auch in diesen Fällen einer Beschädigung des Kompressors durch die Überwachung der Umgebungstemperatur des Kompressors sicher vorgebeugt ist.

Gemäß einer Weiterbildung der Erfindung nach Anspruch 7 ist in der Steuereinheit ein Sicherheitsniveau für den Fahrzeugaufbau des Kraftfahrzeuges festgelegt, wobei bei einem Abregelvorgang eine Überschreitung des jeweiligen Abschaltgrenzwertes der Betriebsparameter nur dann zugelassen wird, wenn das aktuelle Niveau des Fahrzeugaufbaus oberhalb des Sicherheitsniveaus liegt. Das Sicherheitsniveau kann z. B. in der Steuereinheit so festgelegt werden, dass sich der Fahrzeugaufbau des Kraftfahrzeuges in dem Sicherheitsniveau in einem fahrdynamisch sicheren Zustand befindet. Das Sicherheitsniveau kann alternativ in der Steuereinheit so festgelegt werden, dass ein besonders guter Fußgängerschutz möglich ist, wenn sich der Fahrzeugaufbau des Kraftfahrzeuges im Sicherheitsniveau befindet. Der Vorteil der Weiterbildung ist darin zu sehen, dass eine Überschreitung der jeweiligen Abschaltgrenzwerte der Betriebsparameter nicht bei allen Abregelvorgängen zugelassen wird, sondern nur bei bestimmten Abregelvorgängen. Somit ist die Anzahl der Abregelvorgänge, bei denen eine Überschreitung der Abschaltgrenzwerte zugelassen wird, reduziert und einer Beschädigung der empfindlichen Bestandteile der Niveauregelanlage ist noch besser vorgebeugt.

Gemäß einer Weiterbildung der Erfindung nach Anspruch 8 wird eine Überschreitung der jeweiligen Abschaltgrenzwerte der Betriebsparameter nur dann zugelassen, wenn mit einem Abregelvorgang das Sicherheitsniveau des Fahrzeugaufbaus eingestellt werden soll. Für sämtliche Abregelvorgänge, die oberhalb des Sicherheitsniveaus beendet sein sollen, wird hingegen eine Überschreitung der jeweiligen Grenzwerte der Betriebsparameter nicht zugelassen, da in diesen Fällen das Sicherheitsniveau nicht berlötigt wird. Der Vorteil dieser Weiterbildung ist darin zu sehen, dass die Anzahl der Abregelvorgänge, bei denen eine Überschreitung der Abschaltgrenzwerte der Betriebsparameter zugelassen wird, nochmals reduziert ist. Somit ist einer Beschädigung der empfindlichen Bestandteile der Niveauregelanlage besonders gut vorgebeugt.

Gemäß einer Weiterbildung der Erfindung nach Anspruch 9 ist in der Steuereinheit eine Grenzgeschwindigkeit für das Kraftfahrzeug festgelegt, wobei eine Überschreitung der jeweiligen Abschaltgrenzwerte der Betriebsparameter nur dann zugelassen wird, wenn die aktuelle Geschwindigkeit des Kraftfahrzeuges die Grenzgeschwindigkeit überschreitet. Solange die Geschwindigkeit des Kraftfahrzeuges unterhalb der Grenzgeschwindigkeit liegt, ist es nicht notwendig, den Fahrzeugaufbau in ein Sicherheitsniveau abzusenken. Der Vorteil der Weiterbildung ist darin zu sehen, dass die Anzahl der Abregelvorgänge, bei denen eine Überschreitung der Abschaltgrenzwerte der Betriebsparameter zugelassen wird, nochmals reduziert ist.

Gemäß einer Weiterbildung der Erfindung nach Anspruch 10 wird für jeden Betriebsparameter zusätzlich zu dem dazugehörigen Abschaltgrenzwert ein Maximalgrenzwert festgelegt, der größer ist als der jeweilige Abschaltgrenzwert, wobei ein Abregelvorgang unterbrochen wird, wenn der Maximalgrenzwert mindestens eines Betriebsparameters erreicht ist. Durch die Weiterbildung ist sichergestellt, dass die Betriebsparameter der empfindlichen Bestandteile der Niveauregelanlage nicht zu stark ansteigen. Hierbei werden die Maximalgrenzwert so festgelegt, dass die empfindlichen Bestandteile der Niveauregelanlage einige wenige Male bis zu diesen Maximalgrenzwerten ohne Beschädigung betrieben werden können. Der Vorteil der Weiterbildung ist darin zu sehen, dass einer Beschädigung der empfindlichen Bestandteile der Niveauregelanlage auch dann sicher vorgebeugt ist, wenn die Abschaltgrenzwerte häufiger überschritten werden.

Gemäß einer Weiterbildung der Erfindung nach Anspruch 11 wird ein erneuter Abregelvorgang oder eine Fortsetzung eines abgebrochenen Abregelvorganges erst dann wieder zugelassen, wenn sämtliche Betriebsparameter wieder den ersten Abschaltgrenzwert unterschritten haben. Der Vorteil dieser Weiterbildung ist darin zu sehen, dass ein ständiges Ein- und Ausschalten der empfindlichen Bestandteile der Niveauregelanlage vermieden wird.

Gemäß einer Weiterbildung der Erfindung nach Anspruch 12 werden die Luftfedern über einen Atmosphärenauslass in die Atmosphäre entleert, wenn der Abregelvorgang unterbrochen ist. Der Vorteil dieser Weiterbildung ist darin zu sehen, dass ein schneller Abregelvorgang in der Niveauregelanlage auch dann möglich ist, wenn der Kompressor der Niveauregelanlage nicht mehr betrieben werden kann ohne beschädigt zu werden.

Ein Ausführungsbeispiel und weitere Vorteile der Erfindung werden im Zusammenhang mit den nachstehenden Figuren erläutert, darin zeigt:
- Fig. 1: eine geschlossene Niveauregelanlage für ein Kraftfahrzeug in schematischer Darstellung;
- Fig. 2: ein Flussdiagramm;
- Fig. 3: ein Flussdiagramm;
- Fig. 4: ein Diagramm.

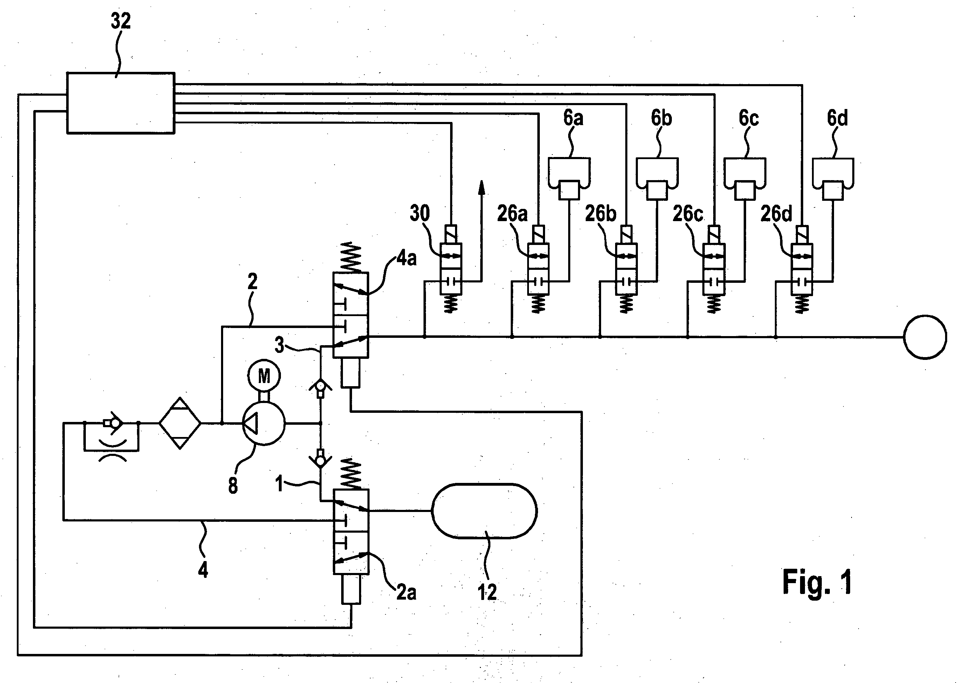

Figur 1 zeigt in schematischer Darstellung eine geschlossene Niveauregelanlage für ein Kraftfahrzeug, die ausführlich in der EP 1243447 A2 beschrieben ist und deshalb hier nur kurz erläutert werden soll. Die geschlossene Niveauregelanlage enthält neben anderen Bestandteilen Luftfedern 6a bis 6d, einen Druckluftspeicher 12, Druckluftleitungen 1 bis 4 mit schaltbaren Wegeventilen 2a, 4a, 26a bis 26d und 30, einen Kompressor 8 und eine Steuereinheit 32. Mit Hilfe der geschlossenen Niveauregelanlage werden die Luftfedern 6a bis 6d befüllt oder entleert. Hierbei entspricht ein Befüllen der Luftfedern 6a bis 6d einem Aufregelvorgang des Fahrzeugaufbaus des Kraftfahrzeuges, in das die Niveauregelanlage eingebaut ist, wohingegen ein Entleeren der Luftfedern 6a bis 6d einem Abregelvorgang des Fahrzeugaufbaus entspricht.

Ein Befüllen der Luftfedern 6a bis 6d erfolgt wie folgt: Von der Steuereinheit 32 werden die schaltbaren Wegeventile 4a und 26a bis 26d angesteuert, so dass diese von dem in der Figur 1 gezeigten Schaltzustand in ihren anderen Schaltzustand übergehen. Dann wird von der Steuereinheit 32 der Motor M des Kompressors angesteuert, so dass dieser anfängt zu laufen. Aus dem Druckluftspeicher 12 wird dann über die Druckluftleitung 1, in der das Wegeventil 2a liegt, und über die Druckluftleitung 2, in der die schaltbaren Wegeventile 4a und 26a bis 26d liegen, Druckluft in die Luftfedern 6a bis 6d überführt. Eine Überführung von Druckluft aus dem Druckluftspeicher 12 in den Luftfedern 6a bis 6d erfolgt grundsätzlich solange, bis die Steuereinheit 32 feststellt, dass der Fahrzeugaufbau des Kraftfahrzeuges das gewünschte Niveau einnimmt. Danach werden der Motor M des Kompressors 8 und die schaltbaren Wegeventile 26a bis 26d nicht mehr angesteuert, so dass der Kompressor aufhört zu laufen und die Wegeventile wieder in den in der Figur 1 gezeigten Schaltzustand übergehen.

Ein Entleeren der Luftfedern 6a bis 6d erfolgt wie folgt: Zunächst werden von der Steuereinheit 32 die Wegeventile 26a bis 26d und 2a angesteuert, so dass diese von dem in der Figur 1 gezeigten Zustand in den anderen Schaltzustand übergehen. Danach wird von der Steuereinheit 32 der Motor M des Kompressors 8 angesteuert, so dass dieser beginnt zu laufen. Mit Hilfe des Kompressors 8 wird dann aus den Luftfedern 6a bis 6d Druckluft über die Druckluftleitung 3, in der die Wegeventile 26a bis 26d und 4a liegen, und über die Druckluftleitung 4, in der das Wegeventil 2a liegt, in den Druckluftspeicher 12 überführt. Das Überführen der Druckluft aus den Luftfedern 6a bis 6d erfolgt grundsätzlich solange, bis die Steuereinheit 32 feststellt, dass der Fahrzeugaufbau in das gewünschte Niveau abgesenkt ist. Sobald die Steuereinheit 32 dies feststellt, steuert sie den Motor M des Kompressors 8 und die schaltbaren Wegeventile 26a bis 26d nicht mehr an, so dass der Kompressor aufhört zu laufen und die Wegeventile 26a bis 26d wieder in den in der Figur 1 gezeigten Schaltzustand übergehen. Alternativ ist es möglich, dass die Luftfedern 6a bis 6d zur Entleerung bzw. zur Abregelung des Fahrzeugaufbaus in die Atmosphäre entleert werden. Dazu steuert die Steuereinheit 32 die schaltbaren Wegeventile 26a bis 26d und 30 an, so dass jede Luftfeder 6a bis 6d über das jeweilige Wegeventil 26a bis 26d und das schaltbare Wegeventil 30 in die Atmosphäre entleert werden können. Sobald die Steuereinheit 32 feststellt, dass der Fahrzeugaufbau das gewünschte Niveau einnimmt, werden die Wegeventile 26a bis 26d und 30 nicht mehr angesteuert, so dass sie wieder in den in der Figur 1 gezeigten Schaltzustand übergehen.

In der Steuereinheit 32 sind für den Kompressor 8 und für die schaltbaren Wegeventile 26a bis 26d Abschaltgrenzwerte für bestimmte Betriebsparameter gespeichert. So sind in der Steuereinheit 32 für den Kompressor 8 ein Abschaltgrenzwert für den Betriebsparameter "Kompressortemperatur" und ein zusätzlicher Abschaltgrenzwert für den Betriebsparameter "Umgebungstemperatur des Kompressors" gespeichert. Für die schaltbaren Wegeventile 26a bis 26d ist in der Steuereinheit 32 ein Abschaltgrenzwert für den Betriebsparameter "Einschaltdauer" gespeichert. Die genannten Betriebsparameter werden in der Steuereinheit 32 ständig überwacht. Eine Überwachung der Kompressortemperatur und der Umgebungstemperatur des Kompressors kann beispielsweise mit Temperatursensoren oder mit einem Temperaturmodell in an sich bekannter Art und Weise erfolgen. Wenn während des Befüllens der Luftfedern 6a bis 6d, d. h. während eines Aufregelvorgangs in der Niveauregelanlage, von der Steuereinheit 32 festgestellt wird, dass mindestens einer der genannten Betriebsparameter den dafür vorgesehenen Abschaltgrenzwert erreicht, wird der Aufregelvorgang von der Steuereinheit 32 abgebrochen. Im Gegensatz dazu wird bei Abregelvorgängen eine Überschreitung der Abschaltgrenzwerte der genannten Betriebsparametern zugelassen, so dass ein Abregelvorgang immer abgeschlossen werden kann (d. h. der Abregelvorgang wird immer solange fortgesetzt, bis der Fahrzeugaufbau des Kraftfahrzeuges das gewünschte Niveau erreicht). Dadurch ist sichergestellt, dass der Fahrzeugaufbau immer in ein fahrdynamisch sicheres Niveau oder in ein Tiefniveau abgesenkt werden kann, das dem Fußgängerschutz ausreichend Rechnung trägt.

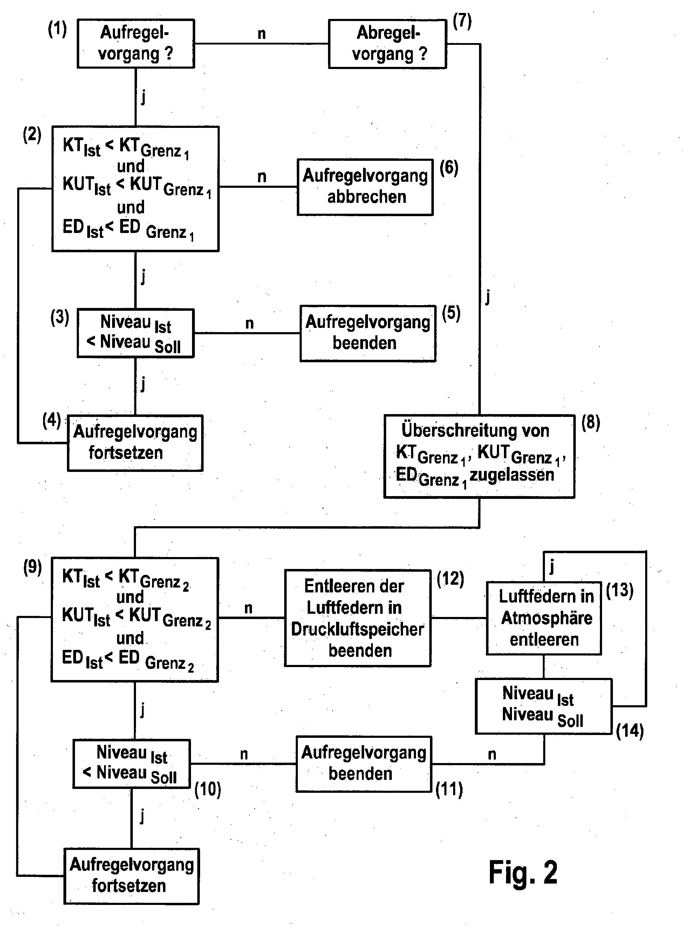

Im Zusammenhang mit dem in der Figur 2 gezeigten Flussdiagramm wird im Folgenden erläutert, wie in der Steuereinheit 32 die Betriebsparameter im Einzelnen überwacht werden. Im Schritt 1 wird von der Steuereinheit 32 überprüft, ob ein Aufregelvorgang durchgeführt werden soll. Wenn dies der Fall ist, leitet die Steuereinheit 32 ein Aufregelvorgang ein, so wie dies im Zusammenhang mit der Figur 1 beschrieben worden ist. Während der Durchführung des Aufregelvorganges werden die Betriebsparameter Kompressortemperatur KT_{Ist}, Kompressorumgebungstemperatur KUT_{Ist} und die Einschaltdauer der schaltbaren Wegeventile 26a bis 26d ED_{Ist} ständig überwacht, d. h. es wird ständig überprüft, ob die Betriebsparameter kleiner als die dazugehörigen Abschaltgrenzwerte KT_{Grenz1}, KTU_{Grenz1}, ED_{Grenz1} sind. Ferner wird in der Steuereinheit 32 ständig überwacht, ob das Ist-Niveau des Fahrzeugaufbaus Niveau_{Ist} kleiner ist als das Sollniveau des Fahrzeugaufbaus Niveau_{Soll} (s. Schritt 3). Wenn dies der Fall ist, wird der Aufregelvorgang fortgesetzt, so wie dies im Schritt 4 gezeigt ist. Anderenfalls wird der Aufregelvorgang beendet, da der Fahrzeugaufbau das Soll-Niveau erreicht hat (s. Schritt 5). Ergibt die ständige Überwachung der Betriebsparameter jedoch, dass einer der Betriebsparameter den Abschaltgrenzwert KT_{Grenz1} bzw. KUT_{Grenz1} bzw. ED_{Grenz1} erreicht, wird der Aufregelvorgang abgebrochen (s. Schritt 6). In diesem Fall befindet sich der Fahrzeugaufbau noch unterhalb des gewünschten Soll-Niveaus. Der Aufregelvorgang wird erst dann vorgesetzt, wenn der Betriebsparameter, dessen Abschaltgrenzwert erreicht wurde, wieder unter den Abschaltgrenzwert abgesunken ist. Hierbei wird vorzugsweise für jeden Betriebsparameter ein Einschaltgrenzwert festgelegt, der kleiner ist als der Abschaltgrenzwert und eine Fortsetzung des Aufregelvorganges wird erst dann zugelassen, wenn der Betriebsparameter den Einschaltgrenzwert erreicht. Hierdurch wird eine ständige Wiederaufnahme, gefolgt von einem sofortigen Wiederabbruch des Aufregelvorganges vermieden.

Beispiel: Für die Kompressortemperatur KT wird der Abschaltgrenzwert KT_{Grenz1} und der Einschaltgrenzwert KT_{Grenz3} in der Steuereinheit 32 festgelegt, wobei gilt KT_{Grenz3} < KT_{Grenz1}. Wenn die Kompressortemperatur KT den Abschaltgrenzwert KT_{Grenz1} erreicht, wird im Schritt 6 der Aufregelvorgang abgebrochen. Eine Fortsetzung des Aufregelvorganges wird erst dann zugelassen, wenn sich der Kompressor bis auf den Einschaltgrenzwert KT_{Genz3} abgekühlt hat.

Stellt die Steuereinheit im Schritt 1 fest, dass kein Aufregelvorgang durchgeführt werden soll, so überprüft die Steuereinheit 32, ob ein Abregelvorgang durchgeführt werden soll (s. Schritt 7). Falls dies der Fall ist, wird von der Steuereinheit 32 ein Abregelvorgang eingeleitet, so wie es im Zusammenhang mit der Figur 1 erläutert worden ist. Auch während eines Abregelvorganges werden von der Steuereinheit 32 ständig die oben genannten Betriebsparameter überwacht. Während des Abregelvorganges wird von der Steuereinheit 32 jedoch ein Überschreiten der jeweiligen Abschaltgrenzwerte der genannten Betriebsparameter zugelassen (s. Schritt 8). Gemäß einem ersten Ausführungsbeispiel der Erfindung wird von der Steuereinheit 32 während eines Abregelvorganges immer das Ist-Niveau des Fahrzeugaufbaus Niveau_{Ist} dahingehend überprüft, ob es größer ist als das Soll-Niveaus des Fahrzeugaufbaus Niveau_{Soll}. Solange dies der Fall ist, wird der Abregelvorgang fortgesetzt. Andernfalls wird der Abregelvorgang beendet, da der Fahrzeugaufbau sein Sollniveau erreicht hat. Bei diesem ersten Ausführungsbeispiel der Erfindung wird also eine "beliebige Überschreitung" der Betriebsparameter KT, KTU, ED zugelassen.

Gemäß einem zweiten Ausführungsbeispiel der Erfindung werden während eines Abregelvorganges von der Steuereinheit 32 die genannten Betriebsparameter überwacht und es wird ständig überprüft, ob die Betriebsparameter kleiner sind als dazugehörige Maximalgrenzwerte KT_{Grenz2}, KUT_{Grenz2} und ED_{Grenz2}, die größer sind als die ersten Abschaltgrenzwerte (d.h. es gilt: KT_{Grenz2} > KT_{Grenz1}, KUT_{Grenz2} > KUT_{Grenz1} und ED_{Grenz2} > ED_{Grenz1}) Solange alle Betriebsparameter kleiner als die Maximalgrenzwerte sind, wird der Abregelvorgang fortgesetzt, wobei das Ist-Niveau des Fahrzeugaufbaus ständig mit dem Sollniveau des Fahrzeugaufbaus verglichen wird (siehe Schritt 10). Der Abregelvorgang wird beendet, wenn das Ist-Niveau des Fahrzeugaufbaus dem gewünschten Soll-Niveau entspricht (siehe Schritt 11).

Wird in der Steuereinheit 32 jedoch vorher festgestellt, dass mindestens einer der Betriebsparameter Kompressortemperatur, Kompressorumgebungstemperatur oder Einschaltdauer den dazugehörigen Maximalgrenzwert erreicht, so wird ein Entleeren der Luftfedern 6a bis 6d in den Druckluftspeicher 12 mit Hilfe des Kompressors 8 (siehe auch Fig. 1 und dazugehörige Figurenbeschreibung) beendet. Dies bedeutet insbesondere, dass der Kompressor aufhört zu laufen. Der Abregelvorgang ist dann abgebrochen und der Fahrzeugaufbau des Kraftfahrzeuges befindet sich oberhalb des gewünschten Sollniveaus.

Zur Fortsetzung und schnellen Beendigung des Abregelvorganges ist es in diesem Fall möglich, die Luftfedern 6a bis 6d direkt in die Atmosphäre zu entleeren, wie dies im Zusammenhang mit der Fig. 1 bereits beschrieben worden ist. Eine Entleerung der Luftfedern in die Atmosphäre findet solange statt, bis das Ist-Niveau des Fahrzeugaufbaus das gewünschte Soll-Niveau erreicht hat (siehe Schritte 13 und 14).

Eine Fortsetzung des Abregelvorganges durch Entleeren der Luftfedern 6a bis 6d mit Hilfe des Kompressors 8 in den Druckluftspeicher 12 (siehe Fig. 1) wird erst dann wieder zugelassen, wenn der Betriebsparameter, dessen Maximalgrenzwert überschritten worden ist, wieder den Abschaltgrenzwert unterschritten hat.

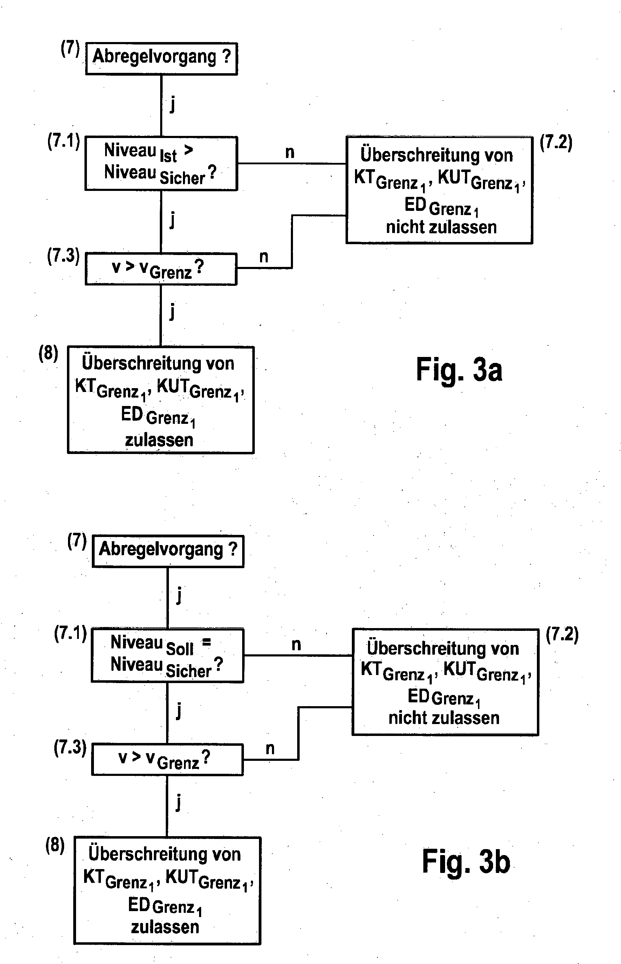

Fig. 3a zeigt ein Diagramm zur Einleitung eines Abregelvorganges. Wird in der Steuereinheit 32 erkannt, dass ein Abregelvorgang eingeleitet werden soll, so wird in der Steuereinheit zunächst überprüft, ob das Ist-Niveau Niveau_{Ist} des Kraftfahrzeugaufbaus größer ist als ein in der Steuereinheit 32 festgelegtes Sicherheitsniveau Niveau_{Sicher}. Ergibt die Überprüfung in der Steuereinheit 32, dass das Ist-Niveau kleiner oder gleich dem Sicherheitsniveau ist, so wird eine Überschreitung der Abschaltgrenzwerte der Betriebsparameter nicht zugelassen (siehe Schritt 7.2). Befindet sich der Fahrzeugaufbau jedoch in einem Ist-Niveau, das größer ist als das Sicherheitsniveau, so wird im nächsten Schritt in der Steuereinheit 32 überprüft, ob die Geschwindigkeit v des Kraftfahrzeuges größer ist als eine in der Steuereinheit 32 festgelegte Grenzgeschwindigkeit V_{Grenz}. Ist dies nicht der Fall, so wird bei einem Abregelvorgang eine Überschreitung der Abschaltgrenzwerte der Betriebsparameter nicht zugelassen (siehe Schritt 7.2). Ist hingegen die Fahrzeuggeschwindigkeit v größer als die Grenzgeschwindigkeit V_{Grenz}, so wird eine Überschreitung der Abschaltgrenzwerte der Betriebsparameter zugelassen (siehe Schritt 8) und in diesem Fall wird der Abregelvorgang solange fortgesetzt, wie es im Zusammenhang mit der Figur 2 beschrieben worden ist (siehe Schritte 8 bis 14 in der Figur 2).

Das in der Fig. 3b gezeigte Flussdiagramm entspricht weitgehend dem in der Fig. 3a gezeigten Flussdiagramm. Der einzige Unterschied ist lediglich darin zu sehen, dass im Schritt 7.1 überprüft wird, ob das in einem Abregelvorgang angestrebte Soll-Niveau Niveau_{Soll} mit dem Sicherheitsniveau Niveau_{Sicher} übereinstimmt. Eine Überschreitung der Abschaltgrenzwerte der Betriebsparameter gemäß Schritt 8 wird nur dann zugelassen, wenn dies der Fall ist und wenn zusätzlich die Geschwindigkeit v des Fahrzeuges größer ist als die in der Steuereinheit 32 festgelegte Grenzgeschwindigkeit v_{Grenz} (siehe Schritt 7.3). Andernfalls wird eine Überschreitung der Abschaltgrenzwerte der Betriebsparameter von der Steuereinheit 32 nicht zugelassen (siehe Schritt 7.2).

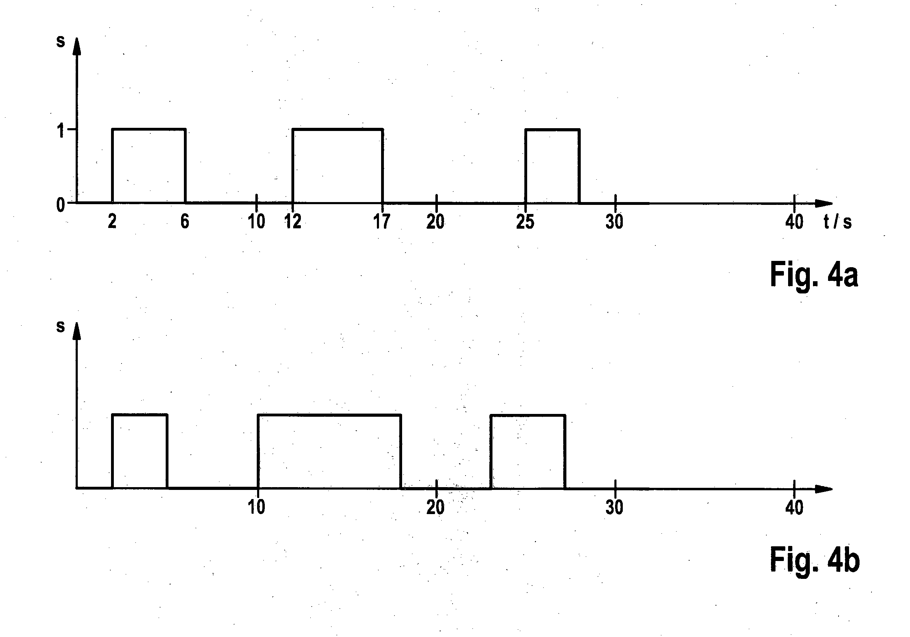

Im Zusammenhang mit den Diagrammen gemäß Fig. 4 wird im Folgenden erläutert, wie die Einschaltdauer der schaltbaren Wegeventile 26a bis 26d überwacht wird. In den Figuren 4a und 4b ist die Zeit t über dem Signal S aufgetragen. Für die Überwachung der Einschaltdauer ist in der Steuereinheit 32 (siehe Fig. 1) ein Zeitintervall einer bestimmten Länge, z.B. 10 Sekunden festgelegt. In der Steuereinheit 32 wird die Zeitspanne für jedes schaltbare Wegeventil 26a bis 26d überwacht, während der es in den letzten 10 zurückliegenden Sekunden eingeschaltet war (solange also das Signal "1" vorliegt). Ferner ist in der Steuereinheit 32 ein Abschaltgrenzwert für die Einschaltdauer eines jeden schaltbaren Wegeventils festgelegt. Als Abschaltgrenzwert kann z.B. festgelegt werden, dass ein schaltbares Wegeventil in den letzten 10 Sekunden maximal 5 Sekunden eingeschaltet sein darf. Wenn der Abschaltgrenzwert für ein schaltbares Wegeventil erreicht ist, wird es von der Steuereinheit 32 grundsätzlich nicht mehr angesteuert, so dass es in seinen ausgeschalteten Zustand übergeht (siehe dazu auch Figurenbeschreibung zu Fig. 1). Ein erneutes Einschalten des Wegeventils ist nach Erreichen des Abschaltgrenzwertes erst dann wieder erlaubt, wenn die Einschaltdauer in den zurückliegenden 10 Sekunden auf einen festgelegten Einschaltgrenzwert von z.B. 2 Sekunden abgesunken ist.

Beispiel gemäß Fig. 4a: Nach 10 Sekunden wird in der Steuereinheit 32 festgestellt, dass in den zurückliegenden 10 Sekunden ein schaltbares Wegeventil 4 Sekunden eingeschaltet war (nämlich von dem Zeitraum 2 Sekunden bis 6 Sekunden). Innerhalb dieser 4 Sekunden wurde ein Regelvorgang beendet, so dass ein vorzeitiges Ausschalten des schaltbaren Wegeventils nicht nötig war. Bei t = 12 Sekunden erfolgt eine Anforderung für einen Aufregelvorgang. Vor Einleitung des Aufregelvorganges wird in der Steuereinheit 32 zunächst überprüft, wie lange das schaltbare Wegeventil in den letzten 10 Sekunden (also in dem Zeitraum von 2 bis 12 Sekunden) eingeschaltet war. In der Steuereinheit 32 wird festgestellt, dass während der letzten 10 Sekunden das schaltbare Wegeventil 4 Sekunden eingeschaltet war (nämlich in dem Zeitraum 2 bis 6 Sekunden). Da dieser Zeitraum von 4 Sekunden kleiner ist als die festgelegte Abschaltgrenze für die Einschaltdauer (nämlich 5 Sekunden), wird zum Zeitpunkt t =12 Sekunden ein Einschalten des Ventils erlaubt. In dem gezeigten Beispiel wird der Aufregelvorgang von t = 12 Sekunden bis t = 17 Sekunden, also insgesamt 5 Sekunden, durchgeführt. Wenn der Aufregelvorgang dann noch nicht abgeschlossen ist, was hier angenommen wird, wird der Aufregelvorgang nach t = 17 Sekunden vorzeitig abgebrochen.

Nach t = 17 Sekunden ist ein erneutes Einschalten des schaltbaren Wegeventils erst wieder zu dem Zeitpunkt t = 25 Sekunden erlaubt, da erst zu diesem Zeitpunkt die Einschaltdauer des Wegeventils den Einschaltgrenzwert von 2 Sekunden in den letzten 10 Sekunden erreicht. Der Aufregelvorgang wird also bei t = 25 Sekunden fortgesetzt und dauert in dem gezeigten Beispiel bis t = 28 Sekunden an. Danach ist der Aufregelvorgang im gezeigten Beispiel abgeschlossen, d.h., der Fahrzeugaufbau hat das gewünschte Soll-Niveau erreicht.

In dem Diagramm gemäß Fig. 4b ist ein schaltbares Wegeventil in dem Zeitraum von t = 2 Sekunden bis t = 5 Sekunden eingeschaltet und während dieser Zeit möge ein Aufregelvorgang stattfinden und abgeschlossen werden. Zum Zeitpunkt t = 10 Sekunden ergeht an die Steuereinheit 32 (siehe Fig. 1) eine Anforderung für einen Abregelvorgang. Die Steuereinheit 32 führt den Abregelvorgang aus, indem sie u.a. das schaltbare Wegeventil einschaltet.

Zum Zeitpunkt t = 12 Sekunden beträgt die Einschaltdauer des Ventils:in den letzten zurückliegenden 10 Sekunden 5 Sekunden. Bei einem Aufregelvorgang müsste das Einschaltventil also zum Zeitpunkt t = 12 Sekunden abgeschaltet werden, da der Abschaltgrenzwert von 5 Sekunden für die Einschaltdauer des schaltbaren Wegeventils erreicht ist. Ein weiteres Befüllen einer Luftfeder 6a bis 6d (siehe Fig. 1) wäre dann nicht mehr möglich. Da es sich jedoch um einen Abregelvorgang handelt, wird eine Überschreitung des Abschaltgrenzwertes für die Einschaltdauer zugelassen und der Abregelvorgang wird weiter fortgesetzt. Als Maximalgrenzwert für die Einschaltdauer des schaltbaren Wegeventils während der letzten 10 Sekunden mögen 8 Sekunden festgelegt sein, d.h. das schaltbare Wegeventil wird dann ausgeschaltet, wenn es in den zurückliegenden 10 Sekunden 8 Sekunden eingeschaltet war. Dies ist zu dem Zeitpunkt t = 18 Sekunden der Fall, d.h. zu diesem Zeitpunkt wird der Abregelvorgang vorzeitig abgebrochen. Eine Wiederaufnahme des Abregelvorganges wird dann erlaubt, wenn das schaltbare Wegeventil in den letzten 10 zurückliegenden 10 Sekunden maximal 5 Sekunden eingeschaltet war, im vorliegenden Beispiel also zum Zeitpunkt t = 23 Sekunden. Der Abregelvorgang wird dann bis zum Zeitpunkt t = 27 Sekunden fortgeführt und möge im gewählten Beispiel dann abgeschlossen sein. Zu diesem Zeitpunkt befindet sich der Fahrzeugaufbau des Kraftfahrzeuges also in dem gewünschten Soll-Niveau.

### Bezugszeichenliste

### (Teil der Beschreibung)

- 1: Druckluftleitung
- 2: Druckluftleitung
- 3: Druckluftleitung
- 4: Druckluftleitung
- 2a: schaltbares Wegeventil
- 4a: schaltbares Wegeventil
- 6a - 6d: Luftfeder
- 8: Kompressor
- 12: Druckluftspeicher
- 26a - 26d: schaltbares Wegeventil
- 30: schaltbares Wegeventil
- 32: Steuereinheit

## Patentansprüche

1. Kraftfahrzeug mit einer Niveauregelanlage, die folgende Bestandteile enthält:
- Luftfedern (6a - 6d),
- mindestens einen Druckluftspeicher (12),
- Druckluftleitungen (1-4) mit schaltbaren Wegeventilen (2a, 4a, 26a - 26d), mit denen die Druckluftleitungen (1 - 4) gesperrt oder durchgeschaltet werden können,
- einen Kompressor (8), mit dem über Druckluftleitungen (1 - 4) für einen Aufregelvorgang Druckluft aus dem Druckluftspeicher (12) in die Luftfedern (6a - 6d) überführbar ist, und mit dem über Druckluftleitungen (1 - 4) für einen Abregelvorgang Druckluft aus den Luftfedern (6a - 6d) in den Druckluftspeicher (12) überführbar ist,
- eine Steuereinheit (32), in der ein Abschaltgrenzwert für mindestens einen Betriebsparameter mindestens eines Bestandteils (26a - 26d, 8) der Niveauregelanlage überwacht wird, wobei die Betätigung des Bestandteils (26a - 26d, 8) bei Erreichen des Abschaltgrenzwertes unterbunden bzw. abgebrochen wird,
**dadurch gekennzeichnet, dass** bei Aufregelvorgängen die Betätigung des Bestandteils (26a - 26d, 8) bei Erreichen des Abschaltgrenzwertes unterbunden bzw. abgebrochen wird und bei Abregelvorgängen eine Überschreitung des Abschaltgrenzwertes des Betriebsparameters zugelassen wird.

2. Kraftfahrzeug nach Anspruch 1, **dadurch gekennzeichnet, dass** den schaltbaren Wegeventilen (26a - 26d) und dem Kompressor (8) jeweils mindestens ein Betriebsparameter zugeordnet, und dass bei Abregelvorgängen eine Überschreitung des jeweiligen Abschaltgrenzwertes sämtlicher Betriebsparameter zugelassen wird.

3. Kraftfahrzeug nach Anspruch 2, **dadurch gekennzeichnet, dass** jedem schaltbaren Wegeventil (26a - 26d) dessen Einschaltdauer als Betriebsparameter zugeordnet ist.

4. Kraftfahrzeug nach Anspruch 3, **dadurch gekennzeichnet, dass** die Einschaltdauer eines schaltbaren Wegeventils (26a - 26d) wie folgt in der Steuereinheit überwacht wird:
- es ist ein Zeitintervall einer bestimmten Länge festgelegt,
- es wird die Einschaltdauer überwacht, während der das schaltbare Wegeventil (26a - 26d) in dem zurückliegenden Zeitintervall eingeschaltet ist,
- das schaltbare Wegeventil (26a - 26d) wird grundsätzlich ausgeschaltet, wenn die Einschaltdauer innerhalb des letzten zurückliegenden Zeitintervalls einen festgelegten Abschaltgrenzwert erreicht,
- ein erneutes Einschalten des Wegeventils (26a - 26d) wird erst dann wieder zugelassen, wenn die Einschaltdauer in dem fortschreitenden Zeitintervall einen Einschaltgrenzwert erreicht, der kleiner ist als der Abschaltgrenzwert,
- wobei die Steuereinheit (32) während eines Abregelvorganges eine Überschreitung der Einschaltdauer in dem letzten zurückliegenden Zeitintervall zulässt bzw. die Steuereinheit (32) zur Einleitung eines Ablassvorganges nach einem Ausschalten des Wegeventils (26a - 26d) ein erneutes Einschalten des Wegeventils (26a - 26d) auch dann gestattet, wenn der Einschaltgrenzwert noch nicht erreicht ist.

5. Kraftfahrzeug nach einem der Ansprüche 1 bis 4, **dadurch gekennzeichnet, dass** dem Kompressor (8) die Kompressortemperatur als Betriebsparameter zugeordnet ist.

6. Kraftfahrzeug nach einem der Ansprüche 1 bis 5, **dadurch gekennzeichnet, dass** dem Kompressor (8) die Umgebungstemperatur des Kompressors (8) als Betriebsparameter zugeordnet ist.

7. Kraftfahrzeug nach einem der Ansprüche 1 bis 6, **dadurch gekennzeichnet, dass** in der Steuereinheit (32) ein Sicherheitsniveau für den Fahrzeugaufbau des Kraftfahrzeuges festgelegt ist, und dass bei einem Abregelvorgang eine Überschreitung des jeweiligen Abschaltgrenzwertes der Betriebsparameter nur dann zugelassen wird, wenn das aktuelle Niveau des Fahrzeugaufbaus oberhalb des Sicherheitsniveaus liegt.

8. Kraftfahrzeug nach Anspruch 7, **dadurch gekennzeichnet, dass** eine Überschreitung des jeweiligen Abschaltgrenzwertes der Betriebsparameter nur dann zugelassen wird, wenn mit einem Abregelvorgang das Sicherheitsniveau des Fahrzeugaufbaus eingestellt werden soll.

9. Kraftfahrzeug nach einem der Ansprüche 1 bis 8, **dadurch gekennzeichnet, dass** in der Steuereinheit (32) eine Grenzgeschwindigkeit für das Kraftfahrzeug festgelegt ist, und dass eine Überschreitung des jeweiligen Abschaltgrenzwertes der Betriebsparameter nur dann zugelassen wird, wenn die aktuelle Geschwindigkeit des Kraftfahrzeuges die Grenzgeschwindigkeit überschreitet.

10. Kraftfahrzeug nach einem der Ansprüche 1 bis 9, **dadurch gekennzeichnet, dass** für jeden Betriebsparameter zusätzlich zu dem dazugehörigen Abschaltgrenzwert ein Maximalgrenzwert festgelegt wird, der größer ist als der jeweilige Abschaltgrenzwert, und dass ein Abregelvorgang unterbrochen wird, wenn der Maximalgrenzwert mindestens eines Betriebsparameters erreicht ist.

11. Kraftfahrzeug nach Anspruch 10, **dadurch gekennzeichnet, dass** ein erneuter Abregelvorgang oder eine Fortsetzung eines abgebrochenen Abregelvorganges erst dann wieder zugelassen, wenn sämtliche Betriebsparameter wieder den ersten Abschaltgrenzwert unterschritten haben.

12. Kraftfahrzeug nach einem der Ansprüche 10 bis 11, **dadurch gekennzeichnet, dass** die Luftfedern (6a - 6d) über einen Atmosphärenauslass (30) in die Atmosphäre entleert werden, wenn der Abregelvorgang unterbrochen ist.

13. Niveauregelanlage für ein Kraftfahrzeug, die folgende Bestandteile enthält:
- Luftfedern (6a - 6d),
- einen Druckluftspeicher (12),
- Druckluftleitungen (1-4) mit schaltbaren Wegeventilen (2a, 4a, 26a - 26d), mit denen die Druckluftleitungen (1-4) gesperrt oder durchgeschaltet werden können,
- einen Kompressor (8), mit dem über Druckluftleitungen (1 - 4) für einen Aufregelvorgang Druckluft aus dem Druckluftspeicher (12) in die Luftfedern (6a - 6d) überführbar ist, und mit dem über Druckluftleitungen (1 - 4) für einen Abregelvorgang Druckluft aus den Luftfedern (6a - 6d) in den Druckluftspeicher (12) überführbar ist,
- eine Steuereinheit (32), in der ein Abschaltgrenzwert für mindestens einen Betriebsparameter mindestens eines Bestandteils (26a - 26d, 8) der Niveauregelanlage überwacht wird, wobei die Betätigung des Bestandteils (26a - 26d, 8) bei Erreichen des Abschaltgrenzwertes unterbunden bzw. abgebrochen wird,
**dadurch gekennzeichnet, dass** die Niveauregelanlage nach einem der Ansprüche 1 bis 12 ausgebildet ist.

## Claims

1. Motor vehicle having a ride height control system which contains the following components:
- air springs (6a - 6d),
- at least one compressed air accumulator (12),
- compressed air lines (1 - 4) with switchable directional control valves (2a, 4a, 26a - 26d), with which the compressed air lines (1 - 4) can be closed or opened,
- a compressor (8) with which compressed air can be transferred from the compressed air accumulator (12) into the air springs (6a - 6d) via compressed air lines (1 - 4) for a raising process and with which compressed air can be transferred from the air springs (6a - 6d) into the compressed air accumulator (12) via compressed air lines (1 - 4) for a lowering process,
- a control unit (32) in which a switch-off limiting value for at least one operating parameter of at least one component (26a - 26d, 8) of the ride height control system is monitored, wherein the activation of the component (26a - 26d, 8) is prohibited or aborted when the switch-off limiting value is reached,
**characterized in that** in raising processes the activation of the component (26a - 26d, 8) is prohibited or aborted when the switch-off limiting value is reached, and upward transgression of the switch-off limiting value of the operating parameter is permitted in the case of lowering processes.

2. Motor vehicle according to Claim 1, **characterized in that** the switchable directional control valves (26a - 26d) and the compressor (8) are each assigned at least one operating parameter, and upward transgression of the respective switch-off limiting value of all the operating parameters is permitted in the case of lowering processes.

3. Motor vehicle according to Claim 2, **characterized in that** each switchable directional control valve (26a - 26d) is assigned its switch-on period as an operating parameter.

4. Motor vehicle according to Claim 3, **characterized in that** the switch-on period of a switchable directional control valve (26a - 26d) is monitored in the control unit as follows:
- a time interval of a specific length is defined,
- the switch-on period during which the switchable directional control valve (26a - 26d) is switched on in the preceding time interval is monitored,
- the switchable directional control valve (26a - 26d) is basically switched off when the switch-on period reaches a defined switch-off limiting value within the last preceding time interval,
- renewed switching on of the directional control valve (26a - 26d) is not permitted again until the switch-on period in the proceeding time interval reaches a switch-on limiting value which is lower than the switch-off limiting value,
- wherein during a lowering process the control unit (32) permits the switch-on period in the last preceding time interval to be exceeded, and in order to initiate a lowering process after the directional control valve (26a - 26d) has switched off, the control unit (32) permits renewed switching on of the directional control valve (26a - 26d) even when the switch-on limiting value has not yet been reached.

5. Motor vehicle according to one of Claims 1 to 4, **characterized in that** the compressor (8) is assigned the compressor temperature as an operating parameter.

6. Motor vehicle according to one of Claims 1 to 5, **characterized in that** the compressor (8) is assigned the ambient temperature of the compressor (8) as an operating parameter.

7. Motor vehicle according to one of Claims 1 to 6, **characterized in that** a safety height for the vehicle body of the motor vehicle is defined in the control unit (32), and **in that** during a lowering process upward transgression of the respective switch-off limiting value of the operating parameters is permitted only when the current height of the vehicle body is above the safety height.

8. Motor vehicle according to Claim 7, **characterized in that** upper transgression of the respective switch-off limiting value of the operating parameters is permitted only when the safety height of the vehicle body is to be set with a lowering process.

9. Motor vehicle according to one of Claims 1 to 8, **characterized in that** a limiting speed for the motor vehicle is defined in the control unit (32), and **in that** upward transgression of the respective switch-off limiting value of the operating parameters is permitted only when the current speed of the motor vehicle exceeds the limiting speed.

10. Motor vehicle according to one of Claims 1 to 9, **characterized in that**, in addition to the associated switch-off limiting value, a maximum limiting value, which is higher than the respective switch-off limiting value, is defined for each operating parameter, and **in that** a lowering process is interrupted if the maximum limiting value of at least one operating parameter is reached.

11. Motor vehicle according to Claim 10, **characterized in that** a renewed lowering process or continuation of an aborted lowering process is not permitted again until all the operating parameters have undershot the first switch-off limiting value again.

12. Motor vehicle according to one of Claims 10 to 11, **characterized in that** the air springs (6a - 6d) are emptied into the atmosphere via an atmospheric outlet (30) when the lowering process is interrupted.

13. Ride height control system for a motor vehicle, which contains the following components:
- air springs (6a - 6d),
- a compressed air accumulator (12),
- compressed air lines (1 - 4) with switchable directional control valves (2a, 4a, 26a - 26d), with which the compressed air lines (1 - 4) can be closed or opened,
- a compressor (8) with which compressed air can be transferred from the compressed air accumulator (12) into the air springs (6a - 6d) via compressed air lines (1 - 4) for a raising process and with which compressed air can be transferred from the air springs (6a - 6d) into the compressed air accumulator (12) via compressed air lines (1 - 4) for a lowering process,
- a control unit (32) in which a switch-off limiting value for at least one operating parameter of at least one component (26a - 26d, 8) of the ride height control system is monitored, wherein the activation of the component (26a - 26d, 8) is prohibited or aborted when the switch-off limiting value is reached,
**characterized in that** the ride height control system is embodied according to one of Claims 1 to 12.

## Revendications

1. Véhicule automobile comprenant une installation de réglage de niveau contenant les composants suivantes :
- des ressorts à air (6a-6d),
- au moins un accumulateur d'air sous pression (12),
- des conduites d'air sous pression (1-4) avec des distributeurs commutables (2a, 4a, 26a-26d), avec lesquels les conduites d'air sous pression (1-4) peuvent être bloquées ou connectées,
- un compresseur (8) avec lequel de l'air sous pression peut être transféré hors de l'accumulateur d'air sous pression (12) dans les ressorts à air (6a-6d) par le biais de conduites d'air sous pression (1-4) pour une opération de réglage à la hausse, et avec lequel de l'air sous pression peut être transféré hors des ressorts à air (6a-6d) dans l'accumulateur d'air sous pression (12) par le biais de conduites d'air sous pression (1-4) pour une opération de réglage à la baisse,
- une unité de commande (32), dans laquelle une valeur limite de coupure est surveillée pour au moins un paramètre de fonctionnement d'au moins un composant (26a-26d, 8) de l'installation de réglage de niveau, l'actionnement du composant (26a-26d, 8) étant supprimé ou interrompu à l'obtention de la valeur limite de coupure,
**caractérisé en ce que** dans le cas d'opérations de réglage à la hausse, l'actionnement du composant (26a-26d, 8) est supprimé ou interrompu à l'obtention de la valeur limite de coupure et dans le cas d'opérations de réglage à la baisse, un dépassement de la valeur limite de coupure du paramètre de fonctionnement est autorisé.

2. Véhicule automobile selon la revendication 1, **caractérisé en ce qu'**au moins un paramètre de fonctionnement respectif est associé aux distributeurs commutables (26a-26d) et au compresseur (8), et **en ce que** dans le cas d'opérations de réglage à la baisse, un dépassement de la valeur limite de coupure respective de tous les paramètres de fonctionnement est autorisé.

3. Véhicule automobile selon la revendication 2, **caractérisé en ce que** l'on associe en tant que paramètre de fonctionnement, à chaque distributeur commutable (26a-26d), sa durée d'enclenchement.

4. Véhicule automobile selon la revendication 3, **caractérisé en ce que** la durée d'enclenchement d'un distributeur commutable (26a-26d) est surveillée dans l'unité de commande de la manière suivante :
- on établit un intervalle de temps d'une longueur déterminée,
- la durée d'enclenchement durant laquelle le distributeur commutable (26a-26d) est enclenché dans l'intervalle de temps écoulé est surveillée,
- le distributeur commutable (26a-26d) est en principe déconnecté lorsque la durée d'enclenchement à l'intérieur du dernier intervalle de temps écoulé atteint une valeur limite de coupure fixée,
- un nouvel enclenchement du distributeur (26a-26d) est à nouveau autorisé lorsque la durée d'enclenchement dans l'intervalle de temps en cours atteint une valeur limite d'enclenchement inférieure à la valeur limite de coupure,
- l'unité de commande (32), pendant une opération de réglage à la baisse, autorisant un dépassement de la durée d'enclenchement dans le dernier intervalle de temps écoulé, ou l'unité de commande (32), pour introduire une opération d'évacuation après une déconnexion du distributeur (26a-26d), autorisant aussi un nouvel enclenchement du distributeur (26a-26d) lorsque la valeur limite d'enclenchement n'est pas encore atteinte.

5. Véhicule automobile selon l'une quelconque des revendications 1 à 4, **caractérisé en ce que** la température du compresseur est associée au compresseur (8) en tant que paramètre de fonctionnement.

6. Véhicule automobile selon l'une quelconque des revendications 1 à 5, **caractérisé en ce que** la température environnante du compresseur (8) est associée au compresseur (8) en tant que paramètre de fonctionnement.

7. Véhicule automobile selon l'une quelconque des revendications 1 à 6, **caractérisé en ce qu'**un niveau de sécurité pour la construction du véhicule automobile est établi dans l'unité de commande (32), et **en ce que** dans le cas d'une opération de réglage à la baisse, un dépassement de la valeur limite de coupure respective des paramètres de fonctionnement n'est autorisé que lorsque le niveau actuel de la construction du véhicule est au-dessus du niveau de sécurité.

8. Véhicule automobile selon la revendication 7, **caractérisé en ce qu'**un dépassement de la valeur limite de coupure respective des paramètres de fonctionnement n'est autorisé que lorsque le niveau de sécurité de la construction du véhicule doit être ajusté avec une opération de réglage à la baisse.

9. Véhicule automobile selon l'une quelconque des revendications 1 à 8, **caractérisé en ce que** dans l'unité de commande (32) est établie une vitesse limite pour le véhicule automobile, et **en ce qu'**un dépassement de la valeur limite de coupure respective des paramètres de fonctionnement n'est autorisé que lorsque la vitesse actuelle du véhicule automobile dépasse la vitesse limite.

10. Véhicule automobile selon l'une quelconque des revendications 1 à 9, **caractérisé en ce que** pour chaque paramètre de fonctionnement, en plus de la valeur limite de coupure associée, on établit une valeur limite maximale qui est supérieure à la valeur limite de coupure respective, et **en ce qu'**une opération de réglage à la baisse est interrompue lorsque la valeur limite maximale d'au moins un paramètre de fonctionnement est atteinte.

11. Véhicule automobile selon la revendication 10, **caractérisé en ce qu'**une nouvelle opération de réglage à la baisse ou une poursuite d'une opération de réglage à la baisse interrompue est à nouveau autorisée seulement lorsque tous les paramètres de fonctionnement sont redescendus en dessous de la première valeur limite de coupure.

12. Véhicule automobile selon l'une quelconque des revendications 10 à 11, **caractérisé en ce que** les ressorts à air (6a-6d) sont vidangés dans l'atmosphère par le biais d'une sortie dans l'atmosphère (30), lorsque l'opération de réglage à la baisse est interrompue.

13. Installation de réglage de niveau pour un véhicule automobile, qui contient les composants suivants :
- des ressorts à air (6a-6d),
- un accumulateur d'air sous pression (12),
- des conduites d'air sous pression (1-4) avec des distributeurs commutables (2a, 4a, 26a-26d), avec lesquels les conduites d'air sous pression (1-4) peuvent être bloquées ou connectées,
- un compresseur (8) avec lequel de l'air sous pression peut être transféré hors de l'accumulateur d'air sous pression (12) dans les ressorts à air (6a-6d) par le biais de conduites d'air sous pression (1-4) pour une opération de réglage à la hausse, et avec lequel de l'air sous pression peut être transféré hors des ressorts à air (6a-6d) dans l'accumulateur d'air sous pression (12) par le biais de conduites d'air sous pression (1-4) pour une opération de réglage à la baisse,
- une unité de commande (32), dans laquelle une valeur limite de coupure est surveillée pour au moins un paramètre de fonctionnement d'au moins un composant (26a-26d, 8) de l'installation de réglage de niveau, l'actionnement du composant (26a-26d, 8) étant supprimé ou interrompu à l'obtention de la valeur limite de coupure,
**caractérisée en ce que** l'installation de réglage de niveau est réalisée selon l'une quelconque des revendications 1 à 12.
